Europäisches Patentamt

European Patent Office

Office européen des brevets

(11) Veröffentlichungsnummer : **0 101 459**
B2

(12) # NEUE EUROPÄISCHE PATENTSCHRIFT

(45) Veröffentlichungstag der neuen Patentschrift :
26.04.89

(51) Int. Cl.⁴ : **B 65 G 1/04**, B 66 F 9/07

(21) Anmeldenummer : 83900623.6

(22) Anmeldetag : 17.02.83

(86) Internationale Anmeldenummer :
PCT/DE 83/00031

(87) Internationale Veröffentlichungsnummer :
WO/8302933 (01.09.83 Gazette 83/20)

(54) EINRICHTUNG ZUM EIN-UND AUSLAGERN VON PALETTEN.

(30) Priorität : 18.02.82 DE 3205765

(43) Veröffentlichungstag der Anmeldung :
29.02.84 Patentblatt 84/09

(45) Bekanntmachung des Hinweises auf die Patenterteilung : 28.05.86 Patentblatt 86/22

(45) Bekanntmachung des Hinweises auf die Entscheidung
über den Einspruch : 26.04.89 Patentblatt 89/17

(84) Benannte Vertragsstaaten :
BE DE FR

(56) Entgegenhaltungen :
DE–A– 3 012 826
FR–A– 2 451 874

(73) Patentinhaber : Neuhäuser, Helmut, Dipl.-Ing.
Görlitzer Strasse 43
D-4670 Lünen-Horstmar (DE)

(72) Erfinder : Theobald, Adolf
verstorben (DE)

(74) Vertreter : Honke, Manfred, Dr. et al
Patentanwälte Andrejewski, Honke & Partner Theaterplatz 3 Postfach 10 02 54
D-4300 Essen 1 (DE)

EP 0 101 459 B2

## Beschreibung

Die Erfindung betrifft eine Einrichtung zum Ein- und Auslagern von Paletten mit einer Mehrzahl von unter Bildung von Gassen aufgestellten Kragarmregalen, die von stirnseitigen Holmen und an den Holmen im Abstand voneinander übereinander angeordneten, nach beiden Seiten über die Holme vorspringenden Konsolen gebildet werden, die die einzulagernden selbsttragenden Paletten an ihren Stirnseiten unterfangen, und mit einer jeweils eine Palette aufnehmenden, die Palette in der Gasse höher als dem Einlagerungsniveau entsprechend überhebenden, sowie Ein- und auslagernden Hebevorrichtung mit zwei korrespondierenden, sich in den Regalholmen zweier aufeinander folgender Regale führenden, synchron hebbaren Brücken. Eine solche Lagereinrichtung ist beschrieben in der DE-A-2 911 051.

Bei Lagereinrichtungen, insbesondere Hochregallagereinrichtungen, in denen im Regal eine Vielzahl von Paletten übereinander untergebracht wird, spielt die Raumausnutzung eine erhebliche wirtschaftliche Bedeutung. Bekannte Einrichtungen zum Ein- und Auslagern der Paletten benötigen selbst Raum in den Regalen, der in unerwünschter Weise zu Lasten der Lagerkapazität solcher Lagereinrichtungen geht. Für den Bestandteil einer in der Gasse zwischen zwei Regalen befindlichen Überhebevorrichtung bildende, in das Regal überführbare Schwenkarme (DE-AS-11 77 553, DE-PS-27 25 789) bzw. Teleskopglieder (DE-OS-24 00 871, DE-OS-27 25 789), mit denen die Paletten selbst unterfangen werden, machen zusätzlich zum sich aus dem für das Absetzen bzw. Anheben der Palette erforderlichen Hub einschließlich eines Sicherheitsabstandes ergebenden Totraum zwischen den übereinander angeordneten Regalfächern einen Freiraum für die Einrichtung zum Ein- und Auslagern der Palette erforderlich. Es sind dann auch schon zum Ein- und Auslagern der Palette die Palette bzw. an den Stirnseiten der Palette vorgesehene Kragarme unterfangende, Bestandteil der Überhebevorrichtung bildende Wagen vorgesehen worden, die auf unterhalb der die Palette unterfangenden Regalkonsolen vorgesehenen, über diese Konsolen vorspringenden Fahrbahnen in das Regal hinein verfahrbar sind (DE-OS-23 24 907). Diese, Standartpaletten verwendende Version einer solchen Lagereinrichtung benötigt nach wie vor auch einen den Palettentransportwagen entsprechenden Freiraum zwischen den Regalfächern. In Ausgestaltung ist weitergehend vorgeschlagen worden, im Abstand von den Fahrbahnen endende, mit sich über die Fahrbahnen erstreckenden Kragarmen bzw. Auflagen versehene Paletten einzusetzen, wobei der für die Einrichtung zum Ein- und Auslagern der Palette erforderliche Freiraum sich auf die Fahrwege für die Palettentransportwagen reduziert, der Abstand zwischen den Regalfächern also auf den für das Absenken bzw. Anheben der Palette erforderlichen Hub einschließlich des Sicherheitsabstandes beschränkt werden kann (DE-OS-30 32 050). Zu Lasten der Lagerkapazität gehen hierbei jedoch immer noch die Regalbereiche, in denen die Fahrwege für die Palettentransportwagen liegen. Alle vorbekannten Einrichtungen zum Ein- und Auslagern der Paletten sind im übrigen vergleichsweise schwer zugänglich, was sich zumal bei Störungen als nachteilig erweist.

Vorgeschlagen worden ist zwar auch schon eine Einrichtung zum Ein- und Auslagern von Paletten für aus im Abstand voneinander unter Bildung von Gassen aufgestellte Kragarmregale, wobei sich die Einrichtung zum Ein- und Auslagern der Paletten in den Holmen aufeinander folgender Regale führt, bei dem Regalförderzeug handelt es sich jedoch um eine sich beidseitig in den Regalholmen führende Traverse, auf der nach beiden Seiten hin verfahrbare Teleskoptische zum Ein- und Auslagern von Paletten angeordnet sind (DE-A-2 911 051). Auch hierbei bedarf es nach wie vor eines beachtlichen Freiraumes für die die Paletten ein- bzw. auslagernden Teleskoptische zwischen den Regalfächern zu Lasten der Lagerkapazität.

Die DE-OS-30 12 826 Zeigt eine Regaleinheit, die von einem Portalförderer umgeben ist, in dessen Vertikalstreben Hubwerke auf- und niederfahrbar sind. Diese Hubwerke weisen Auflagekonsolen für Materialboxen auf, welche auf den Kragarmen der Regale abgestellt werden. Dazu werden die Materialboxen von den Auflagekonsolen untergriffen und müssen zwangsläufig beidseits der Kragarmregale vorkragen, denn der Portalförderer ist entlang sämtlicher Kragarmregale und folglich der gesamten Regaleinrichtung verfahrbar. Ferner verlangt diese bekannte Lagereinrichtung einen Bodenförderer unterhalb der Kragarmregale, um darauf die Materialboxen absetzen und abtransportieren zu können.

Ausgehend vom im Vorausgehenden umrissenen Stand der Technik liegt der Erfindung in erster Linie die Aufgabe zugrunde, die Lagerkapazität von Lagereinrichtungen für eine Vielzahl von in Bestandteil der Lagereinrichtung bildende Regale einzulagernden selbstragenden Paletten zu optimieren.

Die Aufgabe wird mit einer Einrichtung zum Ein- und Auslagern von Paletten mit einer Mehrzahl von unter Bildung von Gassen aufgestellten Kragarmregalen, die von stirnseitigen Holmen und an den Holmen im Abstand voneinander übereinander angeordneten, nach beiden Seiten über die Holme vorspringenden Konsolen gebildet werden, die die einzulagernden selbsttragenden Paletten an ihren Stirnseiten unterfangen, und mit einer jeweils eine Palette aufnehmenden, die Palette in der Gasse höher als dem Einlagerungsniveau entsprechend überhebenden, sowie ein- und auslagernden Hebevorrichtung mit zwei korrespondierenden, sich in den Regalholmen zweier aufeinander folgender Regale führenden, synchron hebbaren Brücken gelöst, bei der auf den Brücken jeweils ein quer zu den Regalen synchron verfahrbarer Wagen mit einer in die Lagereinrichtung hinein auskragenden Plattform angeordnet ist, wobei der Überstand der Plattform die untere von zwei im Abstand voneinander übereinander an den Stirnseiten der Paletten vorgesehenen Schultern unterfängt.

Die erfindungsgemäße Unterbringung der Einrichtung zum Ein- und Auslagern der Paletten in der Flucht der Holme der aufeinander folgenden Regale führt im Ergebnis dazu, daß der eigentliche Regalbereich bis auf den Hub für das Absetzen bzw. Anheben der Paletten einschließlich eines geringen Sicherheitsabstandes bei dementsprechend geringem Abstand der Regalfächer bzw. der die Fächer bildenden, die eingelagerten Paletten unterfangenden Konsolen voneinander nahezu vollständig als Lagerraum zur Verfügung steht. Mit der Lagereinrichtung nach der Erfindung ist der weitere Vorteil verbunden, daß sie leicht zugänglich ist, und das dann auch bei in das Regal hinein verfahrenen, Bestandteil der Lagereinrichtung bildenden Wagen, was insbesondere die Behebung von Störungen erleichtert.

Die an den Stirnseiten der Paletten vorzusehenden Schultern werden zweckmäßigerweise von den Schenkeln von die Stirnwände der Paletten bildenden U-Profileisen gebildet.

Zum Überheben der Lagereinrichtung dienen vorzugsweise über Kopf der Holme angeordnete, an den Stirnseiten der Bestandteil der Palettenüberhebevorrichtung bildenden Brücken angreifende synchrone Hubzüge. Im Sinne eines Gleichlaufs der Bestandteil der Palettenüberhebevorrichtung bildenden, in die Lagereinrichtung hinein verfahrbaren Wagen wird vorzugsweise ein Zentralantrieb für diese Wagen vorgesehen.

Die Bestandteil der Palettenüberhebevorrichtung bildenden Brücken werden zweckmäßigerweise von dem Antrieb bzw. das Getriebe für die Wagen zum Ein- und Auslagern der Paletten aufnehmenden Kastenträgern gebildet.

In Ausgestaltung sind für die Führung der Bestandteil der Palettenüberhebevorrichtung bildenden Brücken an den Stirnseiten der Brücken Schlitten vorgesehen, die sich über Führungsrollen gegen die Flansche und den Steg der von U-Profil- bzw. Doppel-T-Profileisen gebildeten Regalholme führen.

Zum Abfangen des von den sich auf der Lagereinrichtung, nämlich dem Bestandteil der Überhebevorrichtung bildenden Wagen, abstützenden Palette herrührenden Kippmoments sind dem die Palette unterfangenden Wagen in weiterer Ausgestaltung Stützrollen zugeordnet, die sich gegen eine am Boden der die Fahrbahn für den Wagen bildende Brücken vorgesehene Führung abstützen.

Zur lagerechten Zuordnung der Palette zur Lagereinrichtung trägt bei, wenn die das Widerlager für den Überstand der Wagenplattform bildenden Schultern an den Stirnseiten der Paletten mit den abgesetzten Überstand der Wagenplattform einfassenden Anschlägen versehen sind und auf dem Überstand der die Palettenschultern unterfangenden Wagenplattform Zentriernocken mit zur Palette hin einfallender Schräge vorgesehen werden.

In der Zeichnung ist die Erfindung an einem in schematischer Weise dargestellten Ausführungsbeispiel weitergehend erläutert. Es zeigen :

Figur 1 einen Schnitt nach Linie I-I in Figur 2 durch das erfindungsgemäß ausgestaltete Regalsystem, abgebrochen,

Figur 2 einen Schnitt nach Linie II-II in Figur 1.

Die dargestellte Lagereinrichtung besteht aus unter Bildung von Gassen 16 aufgestellten Kragarmregalen, die aus Holmen 11, 11' ... und daran im Abstand voneinander übereinander angeordneten, sich nach beiden Seiten der Holme 11, 11' ... erstreckenden Absetzkonsolen 12, 12' ... für Paletten 21 bestehen. Die Holme 11 bzw. 11' ... jedes Regals sind über Kopf durch ein Joch 13 verbunden. Die Paletten 21 sind an den Stirnseiten mit jeweils zwei im Abstand voneinander übereinander angeordneten Schultern 211, 212 versehen, von denen die oberen Schultern 211 sich beim Absetzen der Palette 21 im Regal auf den Konsolen 12 bzw. 12' ... abstützen.

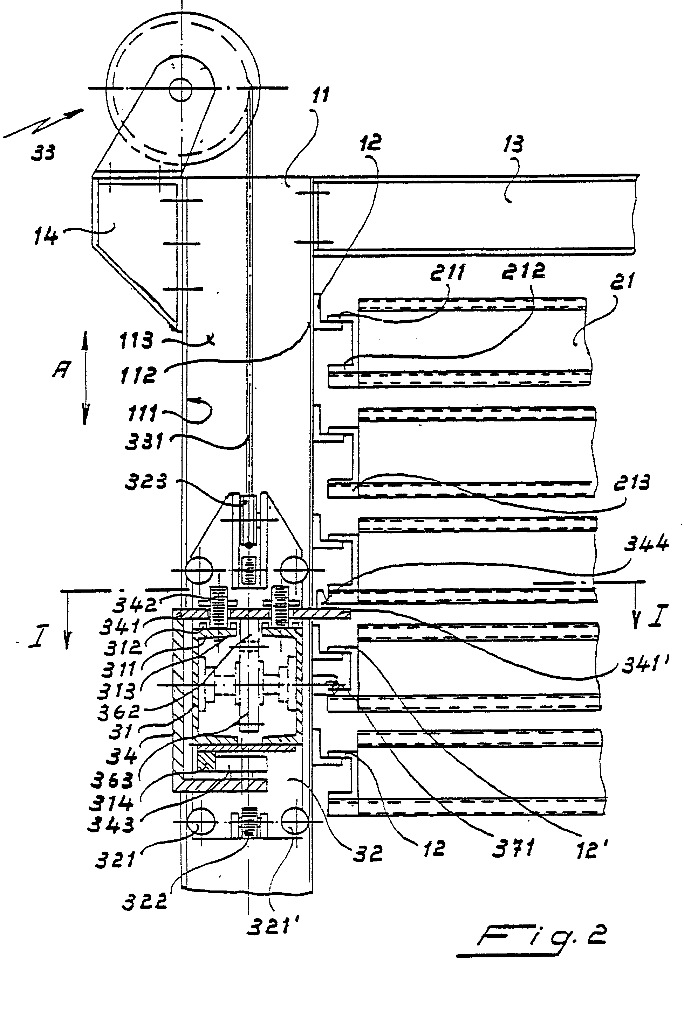

Die Regalholme 11, 11' ... werden gebildet von Doppel-T-Trägern, deren Flansche 111, 112 die Führungen für an den Stirnseiten einer sich zwischen den Holmen 11, 11' ... aufeinander folgender Regale erstreckenden Brücke 31 angeordnete Führungsschlitten 32, 32' bilden. Die Führungsschlitten 32, 32', die sich über Führungsrollen 321, 321' ... 322 gegen die Flansche 111, 112 und den Steg 113 der Holme 11, 11' abstützen, sind in der Vertikalen (Doppelpfeil A in Fig. 2) verlagerbar mittels an den Schlitten 32, 32' über um Umlenkrollen 323 geführte Zugseile 331 angreifender, synchron laufender Elektrozüge 33 ..., die über Kopf der Regale auf an den Holmen 11, 11' vorgesehenen Konsolen 14 angeordnet sind, und damit dann auch die sich zwischen den Schlitten 32, 32' erstreckende Brücke 31. Dabei ist natürlich der synchrone Lauf aller Elektrozüge 33, also auch der an der anderen Stirnseite der Regale 11/12, 12' ..., 11'/12, 12' ... vorgesehene Elektrozüge 33, sichergestellt.

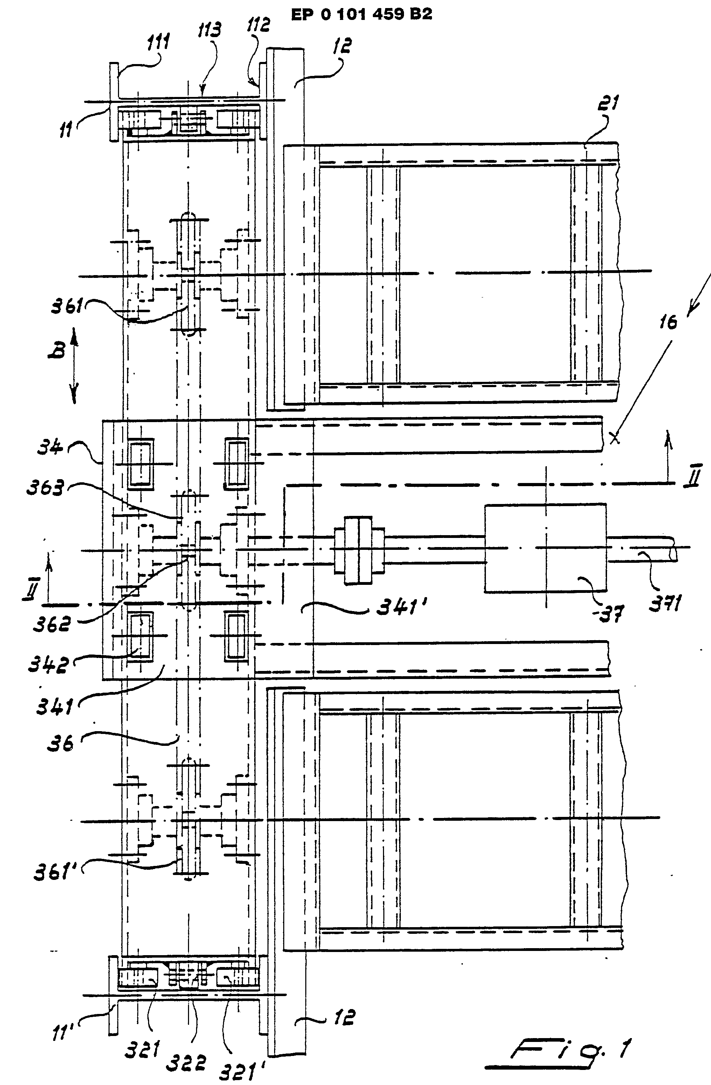

Auf der Brücke 31 ist ein sich über spurgebundene (312) Laufräder 342 ... auf der Brücke 31 abstützender Wagen 34 im Sinne des Doppelpfeiles B in Figur 1 verfahrbar. Als Antrieb für diesen Wagen 34 ist ein in der von einem Kastenträger gebildeten Brücke 31 untergebrachter reversierbarer, um Umlenkrollen 361, 361' in der Brücke 31 geführter Kettentrieb 36 vorgesehen, der über ein durch einen dafür in der Lauffläche 311 der Brücke 31 vorgesehenen Längsschlitz 313 tragende Nocken 362 in Eingriff mit dem Wagen 34 steht und selbst über eine von einem gemeinsamen Antrieb 37 für die Kettentriebe 36 beider Seiten abgehende, Antriebsritzel 363 beaufschlagende Welle 371 angetrieben wird.

Die Plattform 341 des Wagens 34 kragt begrenzt nach innen über die Holme 11, 11' in die Regale hinein aus 341'. Der Überstand 341' der Wagenplattform 341 unterfängt die untere (212) der an den Stirnseiten der Palette 21 vorgesehenen Schulter 211, 212. Das von der sich auf dem Überstand 341' der Wagenplattform 34 abstützenden Palette 21 herrührende Kippmoment wird aufgefangen durch dem Wagen 34 zugeordnete Stützrollen 343, die sich gegen eine Führung 314 an der Unterseite der Brücke 31 abstützen.

Ein Zentriernocken 344 mit zum Regal hin einfallender Zentrierfläche auf dem Überstand 341' der Wagenplattform 341 und vor Kopf der unteren Schultern 212 der Palette 21 vorgesehene, den Überstand 341' der Wagenplattform 341 einfassende Zentrieranschläge 213 tragen zur lagerechten Zuordnung der Palette 21 zur Lagereinrichtung bei.

Zum Einlagern wird die etwa mittels eines Flurförderzeugs in die Gasse 16 überführte Palette 21 mit der beschriebenen Einrichtung zum Ein- und Auslagern von Paletten, die Schultern 212 der Palette 21 mit dem Überstand 341' der Plattform 341 der Bestandteil der Einrichtung bildenden Wagen 34 unterfangend auf das Niveau überhoben, in dem das Regalfach liegt, in das die Palette eingelagert werden soll, wobei zunächst ein Niveau angesteuert wird, das ein Überfahren der Absetzkonsolen 12, 12' ... des Regals mit den Absetzschultern 211 der Palette 21 zuläßt. Sodann wird die Einrichtung bis zum Absetzen der Palettenschultern 211 auf den Regalkonsolen 12, 12' ... und Freiwerden der Wagen 34 von der Palette 21 abgesenkt, worauf die Wagen 34 wieder in die Ausgangslage zurückverfahren werden können und die Einrichtung zu weiteren Arbeitsgängen, das heißt zur Palettenein- bzw. -auslagerung, zur Verfügung steht. Die Auslagerung von Paletten 21 aus den Regalen erfolgt sinngemäß.

Nach der Erfindung kommt man ersichtlich zu einer nahezu vollständigen Ausnutzbarkeit des Regalbereichs, also des Bereichs zwischen den Regalholmen 11, 11', ... dem Flur und dem die Regalholme 11, 11' ... verbindenden Joch 13 für die Paletteneinlagerung unter weitestgehender Vermeidung von Totraum.

**Patentansprüche**

1. Einrichtung zum Ein- und Auslagern von Paletten (21) mit einer Mehrzahl von unter Bildung von Gassen (16) aufgestellten Kragarmregalen, die von stirnseitigen Holmen (z. B. 11) und an den Holmen (z. B. 11) im Abstand voneinander übereinander angeordneten, nach beiden Seiten über die Holme (z. B. 11) vorspringenden Konsolen (12, 12' ...) gebildet werden, die die einzulagernden selbsttragenden Paletten (21) an ihren Stirnseiten unterfangen, und mit einer jeweils eine Palette (21) aufnehmenden, die Palette (21) in der Gasse (16) höher als dem Einlagerungsniveau entsprechend überhebenden, sowie ein- und auslagernden Hebevorrichtung mit zwei korrespondierenden, sich in den Regalholmen (z. B. 11, 11') zweier aufeinander folgender Regale führenden, synchron hebbaren Brücken (31), dadurch gekennzeichnet, daß auf den Brücken (31) jeweils ein quer zu den Regalen synchron verfahrbarer Wagen (34) mit einer in die Lagereinrichtung hinein auskragenden Plattform (341) angeordnet ist, wobei der Überstand (341') der Plattform (341) die untere (212) von zwei im Abstand voneinander übereinander an den Stirnseiten der Paletten (21) vorgesehenen Schultern (211, 212) unterfängt.

2. Einrichtung nach Anspruch 1, dadurch gekennzeichnet, daß die im Abstand voneinander übereinander an den Stirnseiten der Paletten (21) vorgesehenen Schultern (211, 212) von den Schenkeln von die Stirnwände der Paletten (21) bildenden U-Profileisen gebildet werden.

3. Einrichtung nach einem der Ansprüche 1 und 2, gekennzeichnet durch über Kopf der Holme (11, 11') angeordnete, an den Stirnseiten der Bestandteil der Palettenüberhebevorrichtung bildenden Brücken (31) angreifende synchrone Hubzüge (33).

4. Einrichtung nach einem der Ansprüche 1 bis 3, gekennzeichnet durch einen Zentralantrieb (37) für die Bestandteil der Palettenüberhebevorrichtung bildenden Wagen (34).

5. Einrichtung nach einem der Ansprüche 1 bis 4, dadurch gekennzeichnet, daß die Bestandteil der Palettenüberhebevorrichtung bildenden Brücken (31) von den Antrieb bzw. das Getriebe für die Plattformwagen (34) aufnehmenden Kastenträgern gebildet werden.

6. Einrichtung nach einem der Ansprüche 1 bis 5, dadurch gekennzeichnet, daß die Führung für die Bestandteil der Palettenüberhebevorrichtung bildenden Brücken (31) in den Holmen (11, 11') von den Flanschen (111, 112) von die Holme (11, 11') bildende U-Profil- bzw. I-Profileisen gebildet wird, in der sich vor Kopf der Brücken (31) angeordnete, über die Brücke (31) vorspringende Schlitten (32) über Führungsrollen (321, 321' ..., 322) gegen die Flansche (311, 311') und den Steg (312) der Holme (11, 11') abstützend führen.

7. Einrichtung nach einem der Ansprüche 1 bis 6, dadurch gekennzeichnet, daß die die Palette (21) mit ihrem Überstand (341') unterfangende Plattform (341) des Wagens (34) mit das an der Plattform (341) wirksam werdende Kippmoment auffangenden, sich gegen eine am Boden der die Fahrbahn für den Plattformwagen (34) bildenden Brücke (31) vorgesehene Führung (314) abstützenden Stützrollen (343) versehen ist.

8. Einrichtung nach einem der Ansprüche 1 bis 7, dadurch gekennzeichnet, daß die das Widerlager für den Überstand (341') der Wagenplattform (341) bildenden Schultern (212) an den Stirnseiten der Paletten (21) mit den abgesetzten Überstand (341') der Plattform (341) einfassenden Anschlägen (213) versehen sind.

9. Einrichtung nach einem der Ansprüche 1 bis 8, dadurch gekennzeichnet, daß auf dem Überstand (341') der Wagenplattform (341) Zentrierungsnocken (344) für die Palette (21) mit zur Palette (21) hin einfallender Schräge vorgesehen sind.

## Claims

1. Installation for storing and displacing pallets (21) comprising a plurality of cantilever arm shelves which are arranged so as to form lanes (16) and which are formed from beams (e. g. 11) at the side face and from brackets (12, 12' ...) which are disposed above one another on the beams (e. g. 11) with a spacing therebetween and which protrude beyond the beams (e. g. 11) at both sides, said brackets engaging beneath the self-supporting pallets (21) to be stored at their side faces, and such installation comprising a raising device which accommodates a respective pallet (21), such raising device accordingly raising the pallet (21) in the lanes (16) higher than the storage level, as well as storing and displacing the pallet, said raising device having two corresponding, synchronously raisable bridges (31) which lead to the shelf beams (e. g. 11, 11') of two successive shelves, characterised in that a carriage (34), which is synchronously displaceable transversely to the shelves and has a platform (341) which projects into the storage installation, is disposed on each bridge (31), whereby the protuberant portion (341') of the platform (341) is engageable beneath the lower shoulder (212) of two shoulders (211, 212) which are provided above each other with a spacing therebetween on the side faces of the pallets (21).

2. Installation according to claim 1, characterised in that the shoulders (211, 212), which are provided at the side faces of the pallets (21) above each other with a spacing therebetween, are formed from the arms of U-shaped iron profiles forming the side walls of the pallets (21).

3. Installation according to one of claims 1 and 2, characterised by synchronous hoists (33) which are disposed above the top of the beams (11, 11') and engage at the side ends of the bridges (31) forming part of the pallet raising device.

4. Installation according to one of claims 1 to 3, characterised by a central drive means (37) for the carriages (34) forming part of the pallet raising device.

5. Installation according to one of claims 1 to 4, characterised in that the bridges (31) which form part of the pallet raising device are formed from box-girder supports which accommodate the drive means or the gear, respectively, for the platform carriages (34).

6. Installation according to one of claims 1 to 5, characterised in that the guide means for guiding the bridges (31) in the beams (11, 11') said bridges forming part of the pallet raising device, is formed from the flanges (111, 112) of U-shaped or I-shaped iron profiles forming the beams (11, 11'), slide members (32) being guided in said guide means via guide rollers (321, 321'..., 322) so as to be supported on the flanges (311, 311') and the cross-web (312) of the beams (11, 11'), said slide members being disposed at the side of the ends of the bridges (31) and protruding beyond the bridge (31).

7. Installation according to one of claims 1 to 6, characterised in that the platform (341) of the carriage (34) supports the pallet (21) with its protuberant portion (341') and is provided with support rollers (343) which absorb the tilting moment becoming active on the platform (341) and which are supported on a guide means (314) provided on the base of the bridge (31) forming the track for the platform carriage (34).

8. Installation according to one of claims 1 to 7, characterised in that the shoulders (212) at the side faces of the pallets (21), forming the support for the protuberant portion (341') of the carriage platform (341), are provided with stop members (213) which engage in the stepped protuberant portion (341') of the platform (341).

9. Installation according to one of claims 1 to 8, characterised in that centering cams (344) for centering the pallet (21) are provided with an incline, which slopes towards the pallet (21), on the protuberant portion (341') of the carriage platform (341).

## Revendications

1. Installation pour stocker et déstocker des palettes (21) comportant une pluralité de rayonnages à bras en porte à faux installés en formant des couloirs (16), qui sont formés par des longerons frontaux (par exemple 11) et des consoles (12, 12', ...) disposées à intervalles les unes au-dessus des autres, faisant saillie au-delà des longerons (par exemple 11) des deux côtés, qui soutiennent sur leurs côtés frontaux les palettes (21) autoportantes à stocker, et un dispositif élévateur recevant chaque palette (21), soulevant la palette (21) dans le couloir (16) à une hauteur supérieure à celle correspondante au niveau de stockage, et effectuant le stockage et le déstockage, comportant deux ponts (31) correspondants pouvant être soulevés en synchronisme, guidés dans deux longerons (par exemple 11, 11') de deux rayonnages successifs, caractérisée en ce qu'un chariot respectif (34), pouvant être déplacé en synchronisme perpendiculairement aux rayonnages, comportant une plate-forme faisant saillie à l'intérieur de l'installation de stockage, est placée sur chacun des ponts (31), la saillie (341') de la plate-forme (341) soutenant l'épaulement (212) le plus bas de deux épaulements (211, 212) superposés à distance mutuelle sur les côtés frontaux des palettes (21).

2. Installation selon la revendication 1, caractérisée en ce que les épaulements (211, 212) superposés à distance mutuelle sur les côtés frontaux des palettes (21) sont formés par les branches de profilés en U formant les parois frontales des palettes (21).

3. Installation selon la revendication 1 ou 2, caractérisée par des dispositifs élévateurs synchrones (33) disposés au-dessus des longerons (11, 11'), attaquant les côtés frontaux des ponts (31) faisant partie du dispositif de soulèvement des palettes.

4. Installation selon l'une des revendications 1 à 3, caractérisée par un mécanisme d'entraînement central (37) pour le chariot (34) faisant partie du dispositif de soulèvement des palettes.

5. Installation selon l'une des revendications 1 à 4, caractérisée en ce que les ponts (31) faisant partie du dispositif de soulèvement des palettes sont formés par des poutres en caisson recevant le mécanisme d'entraînement ou la transmission des chariots à plate-forme (34).

6. Installation selon l'une des revendications 1 à 5, caractérisée en ce que le guidage des ponts (31) faisant partie du dispositif de soulèvement des palettes dans les longerons (11, 11') est constitué par les ailes (111, 112) des profilés en U ou en I formant les longerons (11, 11'), où sont guidés des chariots (32) placés devant la tête des ponts (31), dépassant des ponts (31), en s'appuyant par des galets de guidage (321, 321'..., 322) contre les ailes (311, 311') et le dos (312) des longerons (11, 11').

7. Installation selon l'une des revendications 1 à 6, caractérisée en ce que la plate-forme (341) du chariot (34), soutenant la palette (21) par sa saillie (341') comporte des galets d'appui (343) absorbant le couple de renversement agissant sur la plate-forme (341), s'appuyant sur une glissière (314) se trouvant au fond du pont (31) qui constitue la voie de roulement du chariot à plate-forme (34).

8. Installation selon l'une des revendications 1 à 7, caractérisée en ce que les épaulements (212) constituant la butée d'appui pour la saillie (341') de la plate-forme de chariot (341) situés sur les côtés frontaux des palettes (21), comportent des butées (213) bordant la saillie décalée (341') de la plate-forme (341).

9. Installation selon l'une des revendications 1 à 8, caractérisée en ce que des cames de centrage (344) pour la palette (21), présentant une pente descendante vers la palette, sont présentes sur la saillie (341') de la plate-forme de chariot (341).

EP 0 101 459 B2

Fig. 1

**EP 0 101 459 B2**

$\overline{Fig. 2}$